# FASCICULE DE BREVET EUROPEEN

(11) **EP 3 009 311 B1**
(45) Date de publication et mention de la délivrance du brevet: **04.09.2019**
(21) Numéro de dépôt: 15186604.3
(22) Date de dépôt: 24.09.2015
(51) Int. Cl.: B60S 1/38

(54) **DISPOSITIF DE SOLIDARISATION ENTRE UNE LAME D'ESSUYAGE ET UN SUPPORT CONSTITUTIFS D'UN BALAI D'ESSUIE-GLACE**
VORRICHTUNG ZUR FESTEN VERBINDUNG ZWISCHEN EINEM WISCHERBLATT UND EINER BESTEHENDEN HALTERUNG FÜR EIN SCHEIBENWISCHERBLATT
SECURING DEVICE BETWEEN A WIPER BLADE AND A SUPPORT CONSTITUTING A WINDSCREEN WIPER

(30) Priorité: 16.10.2014 FR 1459930
(43) Date de publication de la demande: 20.04.2016
(73) Titulaire: Valeo Systèmes d'Essuyage, 78322 Le Mesnil Saint Denis (FR)
(72) Inventeur: BOUSSET, Xavier, 63115 MEZEL (FR)
(74) Mandataire: Vincent, Catherine Marie Marguerite

(56) Documents cités:
- WO-A1-2012/130797
- DE-A1-102012 205 835
- FR-A1- 2 905 650
- US-A1- 2014 047 663
- US-A1- 2014 090 200

## Description

La présente invention concerne le domaine technique des équipements pour l'essuyage d'une glace d'un véhicule automobile.

Un véhicule automobile est couramment équipé d'au moins un essuie-glace pour assurer l'essuyage et le lavage du pare-brise.

L'essuie-glace comprend, de manière connue, un bras d'entraînement effectuant un mouvement de va-et-vient angulaire et un balai allongé comportant une lame d'essuyage en matériau à base d'élastomère.

Le balai et le bras d'entraînement sont reliés par des moyens d'articulation comportant deux organes de liaison articulés entre eux autour d'un axe d'articulation, désignés habituellement par connecteur et adaptateur.

Le balai comprend, outre la lame d'essuyage, un ensemble semi-rigide comportant au moins un élément de rigidification de la lame, aussi appelé vertèbre de rigidification, dont la fonction est d'assurer le contact de la lame avec le pare-brise, sur toute la longueur de la lame.

Le bras entraîne le balai dans le mouvement de va-et-vient angulaire et la lame, frottant contre le pare-brise, évacue l'eau présente sur le pare-brise en dehors du champ de vision du conducteur.

Lorsque la qualité d'essuyage se dégrade, on remplace la lame d'essuyage. Il est donc souhaitable de solidariser la lame d'essuyage à l'ensemble semi-rigide avec des moyens permettant un remplacement aisé de la lame.

Le document US2014090200 A1 décrit un balai d'essuyage avec un embout d'extrémité formé par une partie primaire et une partie secondaire, où ladite partie secondaire comprend un moyen de fixation apte à relier mécaniquement la partie secondaire à la lame d'essuyage du balai.

Ainsi, un dispositif formant support pour une lame d'essuie-glace est connu du document WO2007031260. Le dispositif comprend un support constitutif du balai d'essuie-glace, dans lequel support est ménagé une première gorge d'emboîtement, en translation selon une direction dite longitudinale, d'une partie complémentaire de la lame. Il comprend également une première partie comprenant des moyens de liaison avec le support constitutif du balai d'essuie-glace ainsi qu'un organe de blocage de la lame. Cet organe de blocage comprend un corps comportant des moyens de liaison avec la première partie, dans laquelle est ménagée une deuxième gorge d'emboîtement en translation selon la direction longitudinale de la partie complémentaire de la lame, cette deuxième gorge s'étendant dans le prolongement de la première gorge, et des moyens de blocage en translation de la lame dans la deuxième gorge. L'organe de blocage et les moyens de blocage en translation de la lame sont en métal et le sertissage de l'organe sur la lame est réalisé par déformation de l'organe. Toutefois, ce dispositif est relativement complexe à fabriquer et le sertissage du dispositif sur la lame peut ne pas toujours être correctement réalisé.

L'invention a pour but de fournir un dispositif pour la solidarisation d'une lame d'essuie-glace sur un support de lame d'essuie-glace plus fiable tout en étant simple d'utilisation.

A cet effet, l'invention a pour objet un dispositif de solidarisation entre une lame d'essuyage et un support constitutifs d'un balai d'essuie-glace, ledit dispositif comprenant une première partie apte à être fixée sur ledit support et une deuxième partie apte à être fixée sur ladite lame, lesdites première et deuxième parties étant reliées par un moyen de liaison amovible, ladite deuxième partie comprenant une gorge d'insertion, en translation selon une première direction, d'une partie complémentaire de ladite lame, ledit dispositif comprenant un moyen de blocage, en translation selon ladite première direction, de ladite lame dans ladite gorge, dans lequel ledit moyen de blocage comprend au moins un élément de blocage monté coulissant sur ladite deuxième partie entre une position escamotée autorisant le déplacement de ladite partie complémentaire de la lame dans ladite gorge et une position de blocage en translation de ladite partie complémentaire de la lame dans ladite gorge.

Ainsi, on obtient un dispositif simple à utiliser. En effet, le blocage en translation de la lame dans la deuxième partie du dispositif de solidarisation est obtenu par un simple déplacement de l'élément de blocage entre la position escamotée et la position de blocage.

Une fois l'élément de blocage en position de blocage, la lame est bloquée en translation par rapport à la deuxième partie du dispositif de solidarisation.

En outre, la deuxième partie du dispositif de solidarisation comprenant un moyen de liaison avec la première partie dudit dispositif et ladite première partie comprenant un moyen de liaison avec le support constitutif du balai d'essuie-glace, une fois ces différents moyens de liaison activés et l'élément de blocage en position de blocage, la lame d'essuie-glace est solidarisée de façon simple et fiable avec le support constitutif du balai d'essuie-glace.

Le dispositif selon l'invention peut en outre comporter l'une ou plusieurs des caractéristiques suivantes, prises seules ou en combinaison :
- Ladite gorge d'insertion de ladite deuxième partie est configurée pour retenir directement ladite partie complémentaire de ladite lame d'essuyage. De préférence, ladite gorge d'insertion comprend deux nervures se faisant face à section en "L" formant crochets de retenue de ladite complémentaire de ladite lame d'essuyage.
- L'élément de blocage est monté coulissant sur ladite deuxième partie en translation sensiblement perpendiculairement à ladite première direction, entre ladite position escamotée et ladite position de blocage.
- Au moins l'une desdites première et deuxième parties est en matière plastique. On peut ainsi les mouler et leur donner facilement la géométrie désirée.
- Ladite deuxième partie est surmoulée sur l'élément de blocage. Grâce au fait que ladite deuxième partie est surmoulée sur l'élément de blocage, l'élément de blocage est positionné directement dans le moule et, après moulage du corps, les deux pièces sont rapportées ensemble sur la lame d'essuie-glace. L'opération est donc simple et il n'y a pas de risque de perdre une pièce lors du remplacement de la lame d'essuie-glace.
- L'élément de blocage est en métal. De ce fait, l'élément de blocage peut prendre sa position de blocage en pénétrant de façon relativement aisée dans la lame d'essuie-glace qui est généralement en matériau à base d'élastomère(s).
- Le dispositif comprend deux éléments de blocage disposés de part et d'autre de ladite gorge. Ainsi, lorsqu'ils prennent chacun leur position de blocage, les éléments de blocage pincent entre eux la lame d'essuie-glace et la lame est bloquée en translation dans ladite gorge de la deuxième partie.
- L'élément de blocage est de forme sensiblement plane et comprend un bord portant au moins une dent destinée à s'enfoncer dans la lame lorsque l'élément de blocage est en position de blocage. Cette dent ou la pluralité de dents, orientées de préférence perpendiculairement à la direction longitudinale, permettent à l'élément de blocage de s'enfoncer dans la lame d'essuyage et de bloquer tout mouvement en translation de la lame par rapport à la deuxième partie.
- Ladite deuxième partie et l'élément de blocage comprennent des moyens complémentaires de maintien de l'élément de blocage en position de blocage. Ainsi, une fois l'élément de blocage en position de blocage, il ne peut plus prendre sa position escamotée. La lame est ainsi bloquée dans ladite deuxième partie de façon permanente.
- Les moyens complémentaires de maintien en position de blocage sont des moyens d'encliquetage. Ces moyens sont des moyens simples à réaliser et efficaces. Par exemple, l'élément de blocage comprend une patte munie d'un ergo qui coopère avec une encoche ménagée dans ladite deuxième partie. Avantageusement, l'élément de blocage comprend deux pattes, chacune munie d'un ergot qui coopère avec une encoche correspondante.
- La deuxième partie du dispositif de solidarisation et l'élément de blocage comprennent des moyens complémentaires de maintien de l'élément de blocage en position escamotée. Ainsi, lorsque l'on manipule la deuxième partie du dispositif de solidarisation, notamment avant insertion de la lame, les risques de désolidarisation du support constitutif du balai d'essuie-glace et de l'élément de blocage sont fortement réduits.
- Le moyen de liaison du corps avec la première partie est réalisé sous la forme de moyens d'encliquetage. Ils comprennent par exemple une patte élastique portée par ladite deuxième partie qui coopère avec une fenêtre ménagée dans la première partie.
- Les moyens de liaison de la première partie du dispositif de solidarisation avec ledit support constitutif du balai d'essuie-glace sont des moyens d'encliquetage.

L'invention concerne aussi un balai d'essuie-glace comprenant un dispositif tel que défini précédemment.

L'invention sera mieux comprise à la lecture de la description qui va suivre, donnée uniquement à titre d'exemple non limitatif de la portée de l'invention et faite en se référant aux dessins, dans lesquels :
- la figure 1 est une vue en perspective du dessus d'une extrémité d'un dispositif selon l'invention,
- la figure 2 est une vue en perspective du dessous de l'extrémité du dispositif de la figure 1,
- la figure 3 est une vue en perspective du dessous d'une deuxième partie du dispositif de liaison selon l'invention, les éléments de blocage étant en position escamotée,
- la figure 4 est une vue du dessous d'une deuxième partie du dispositif de liaison et d'une lame d'essuie-glace avant emboîtement de la lame, les éléments de blocage étant en position escamotée,
- la figure 5 est une vue du dessous de la deuxième partie du dispositif de liaison et de la lame, la lame étant emboîtée dans la gorge et les éléments de blocage étant en position de blocage,
- la figure 6 est un agrandissement partiel du corps de la deuxième partie du dispositif de liaison montrant les moyens complémentaires de maintien de l'élément de blocage (non représenté) en position escamotée, portés par le corps de la deuxième partie du dispositif de liaison,
- la figure 7 est une vue à plus grande échelle d'un détail de la figure 5 montrant les moyens complémentaires de maintien de l'élément de blocage (cette fois représenté) en position de blocage.

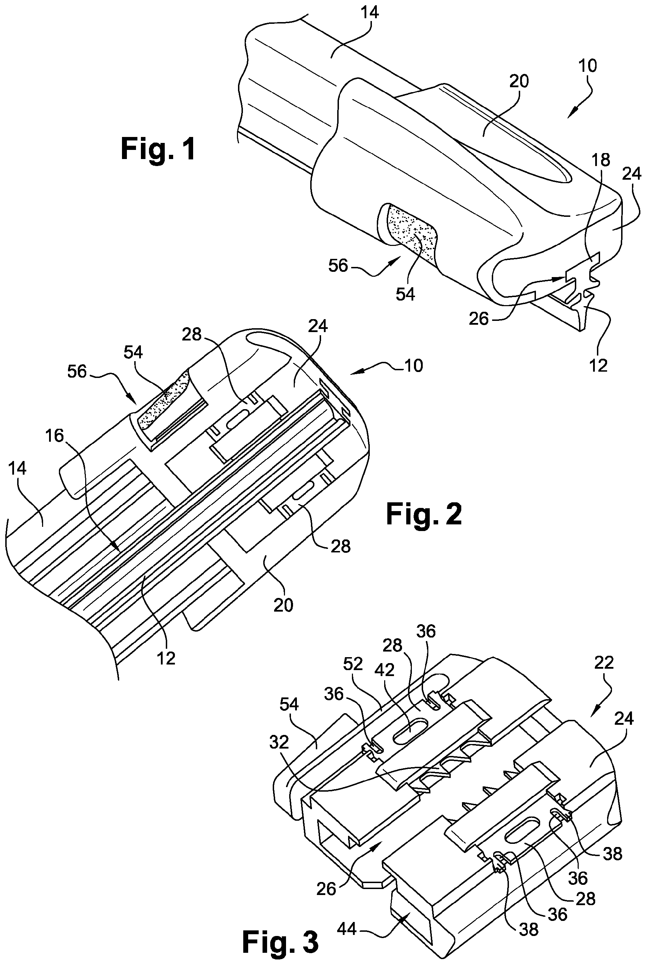

On a représenté sur les figures 1 et 2 une extrémité d'un dispositif 10 formant support pour une lame d'essuie-glace 12. Ce dispositif 10 comprend un support constitutif du balai d'essuie-glace 14 dans lequel est ménagé une gorge 16, dite première gorge, d'emboîtement en translation selon une direction longitudinale d'une partie complémentaire 18 de la lame 12. Le dispositif 10 comprend également une première partie 20 comprenant dans cet exemple un moyen libérable de liaison avec le support 14 constitutif du balai d'essuie-glace.

Le dispositif 10 comprend en outre une deuxième partie, représentée sur la figure 3, comportant un corps 24 dans lequel est ménagé une gorge 26, dite deuxième gorge, d'emboîtement en translation, selon la direction longitudinale, de la partie complémentaire 18 de la lame 12. Ladite deuxième gorge 26 s'étend dans le prolongement de ladite première gorge 16. La deuxième partie 22 comprend également un moyen de blocage en translation de la lame 12 dans ladite deuxième gorge 26. Le moyen de blocage en translation comprend, dans cet exemple, deux éléments de blocage 28 montés coulissant en translation sur le corps 24, sensiblement perpendiculairement à la direction longitudinale. En variante, un seul élément 28 pourrait être prévu.

Sur la figure 2, les éléments de blocage 28 sont représentés en position de blocage de la partie complémentaire 18 de la lame 12 tandis que sur la figure 3, les éléments de blocage 28 sont représentés en positions escamotées autorisant le déplacement de la partie complémentaire 18 de la lame dans ladite deuxième gorge 26.

On va maintenant décrire plus en détail la deuxième partie 22 en se référant aux figures 3 à 7.

Chaque élément de blocage 28 est dans cet exemple de forme sensiblement plane et rectangulaire délimitée par quatre bords dont un bord 30 portant une pluralité de dents 32. Dans l'exemple illustré, le bord 30 porte quatre dents 32 orientées perpendiculairement à la direction longitudinale. Les dents 32 sont destinées à être au moins partiellement enfoncées dans la lame 12 lorsque l'élément de blocage 28 est en position de blocage. Le bord 34 de l'élément blocage 28, opposé au bord 30, comporte deux encoches 36. Les bords opposés 30 et 34 sont reliés entre eux par deux bords 31, 33 parallèles entre eux et à la direction de déplacement des éléments 28. Ces bords 31, 33 forment un moyen de guidage en translation de l'élément 28 coopérant avec un moyen de guidage complémentaire ménagé sur le corps 24, plus particulièrement des bords latéraux d'un évidement E ménagé dans le corps 24. Chaque encoche 36 délimite une patte 38 avec un des bords 31, 33 de l'élément de blocage. Chaque patte 38 comprend un ergot 40 qui forme un moyen de maintien en position de blocage de l'élément de blocage 28. L'élément de blocage 28 comprend également un trou oblong 42 qui forme un moyen de maintien en position escamotée de l'élément de blocage 28. Dans cet exemple, les éléments de blocage 28 sont en métal.

Le corps 24 est de forme sensiblement parallélépipédique et réalisé par exemple en matériau plastique par surmoulage du corps 24 sur les éléments de blocage 28.

Il comprend, dans sa partie médiane, ladite deuxième gorge 26 et également un logement 44 de forme sensiblement parallélépipédique destiné à recevoir une vertèbre de rigidification du balai d'essuie-glace. La deuxième gorge 26 et le logement 44 sont orientés selon la direction longitudinale. On notera que, de part et d'autre de ladite deuxième gorge 26, le corps 24 comprend un évidement E de réception d'un élément de blocage 28 correspondant.

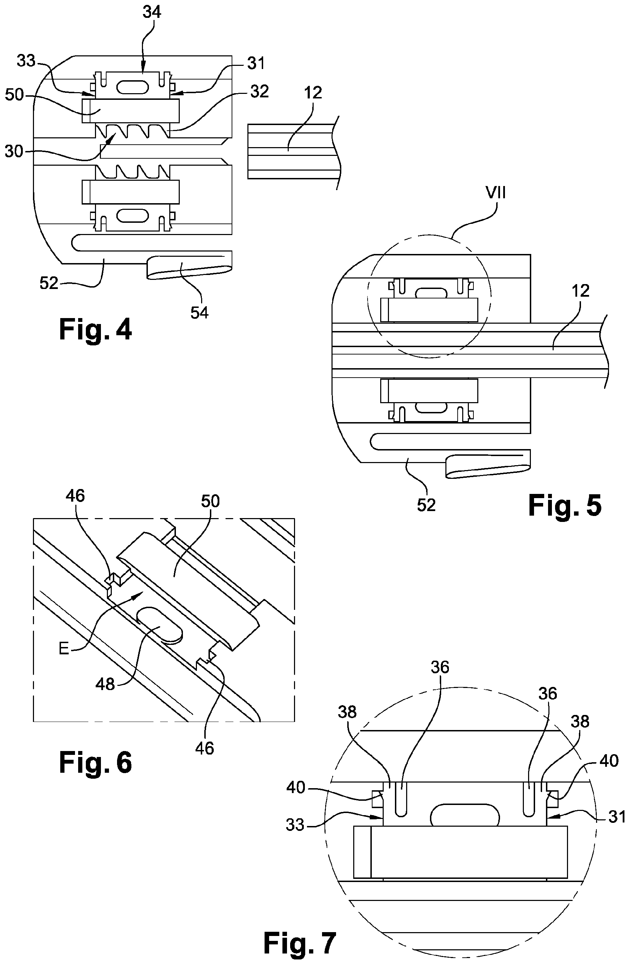

Comme cela est représenté sur la figure 6, chaque évidement E comprend, sur chacun de ses bords latéraux, une encoche 46 formant un moyen de maintien en position de blocage de l'élément de blocage complémentaire de l'ergot 40 porté par l'élément 28.

Le corps 24 comprend également une bride 50 venue de matière avec le reste du corps 24 fermant partiellement l'évidement E. La bride 50 permet de maintenir l'élément de blocage 28 dans l'évidement E tout en conservant un degré de liberté de l'élément de blocage 28 perpendiculairement à la direction longitudinale selon un mouvement de coulissement en translation sur le corps 24.

L'évidement E comprend aussi un moyen de maintien en position escamotée de l'élément de blocage. Dans cet exemple, le moyen de maintien en position escamotée comprennent un bossage 48 de forme complémentaire à la forme du trou oblong 42 de l'élément de blocage 28.

Ainsi, l'élément de blocage 28 est maintenu en position escamotée dans l'évidement E du corps 24 grâce à la coopération des moyens complémentaires de maintien en position escamotée portés par l'élément de blocage 28 et le corps 24, à savoir respectivement la fenêtre oblongue 42 et le bossage 48. Les risques de désolidarisation du corps 24 et de l'élément de blocage 28, notamment avant insertion de la lame 12 dans ladite deuxième gorge 26, sont donc fortement réduits

En position de blocage, la coopération des moyens complémentaires de maintien en position de blocage portée par l'élément de blocage 28 et le corps 24, à savoir respectivement chaque ergot 40 porté par une patte 38 et l'encoche 46, permettent de bloquer l'élément de blocage 28 en position de blocage de sorte que l'élément de blocage 28 ne puisse plus revenir à sa position escamotée de façon non intentionnelle. Ces moyens complémentaires de maintien en position de blocage sont donc dans cet exemple des moyens d'encliquetage.

Le corps 24 comprend en outre une patte élastique 52 portant sur son extrémité libre un ergot 54 destiné à coopérer avec une fenêtre 56 de la première partie 20. La patte 52, l'ergot 54 et la fenêtre 56 forment les moyens libérables de liaison du corps 24 avec la première partie 20, dans le cas présent par encliquetage de l'ergot 54 dans la fenêtre 56.

Pour fabriquer la deuxième partie 22, avantageusement, on fabrique les éléments de blocage 28 en métal, on les dispose dans le moule d'injection du corps 24 et on surmoule le corps 24 en matière plastique sur les éléments de blocage 28. Ce procédé est aisé à réaliser et permet d'éviter l'étape d'assemblage des éléments de blocage 28 et du corps 24 lorsque les éléments de blocage 28 et le corps 24 sont réalisés séparément.

Pour solidariser une nouvelle lame d'essuie-glace 12 sur le support 14 constitutif du balai d'essuie-glace selon l'exemple ci-dessus, on procède de la façon suivante.

On emboîte en translation selon la direction longitudinale la partie complémentaire 18 de la lame 12 dans la première gorge 16 du support 14. On emboîte ensuite en translation la partie complémentaire 18 de la lame 12 dans ladite deuxième gorge 26 de la deuxième partie 22, les éléments de blocage 28 étant en position escamotée. Une fois la lame 12 correctement emboîtée dans ladite deuxième gorge 26, à l'aide d'un outil adéquat, on fait passer les éléments de blocage 28 en position de blocage de la lame en translation en les faisant coulisser en translation sur le corps 24, perpendiculairement à la direction longitudinale dans cet exemple de sorte que les dents 32 sont enfoncées au moins partiellement dans la lame 12 et que les éléments de blocage 28 pincent entre eux la lame 12 et empêchent tout mouvement en translation de la lame 12 dans la deuxième partie 22. On peut facilement vérifier que les éléments de blocage 28 sont en position de blocage en s'assurant que les ergots 40 portés par les pattes 38 de chaque l'élément de blocage 28 coopèrent bien avec les encoches 46 respectives du corps 24. On rapporte ensuite la première partie 20 sur la deuxième partie 22 de sorte que les moyens d'encliquetage formant le moyen de liaison du corps 24 avec la première partie 20 coopèrent entre eux. On rapporte ensuite la première partie 20 sur le support 14 de sorte que le moyen de liaison de la première partie 20 avec le support 14 est actif. La nouvelle lame 12 est ainsi solidarisée au support 14.

On comprend donc que grâce au dispositif de l'invention, la solidarisation d'une nouvelle lame 12 au support 14 est réalisée de manière simple et fiable.

L'invention n'est pas limitée aux modes de réalisation présentés et d'autres modes de réalisation apparaîtront clairement à l'homme du métier. Il est notamment possible de bloquer la lame 12 en translation dans la deuxième partie 22 avant d'emboîter la lame 12 dans la première gorge 16 du support 14. On notera également que le moyen de liaison du corps 24 avec la première partie 20 décrit est par exemple formé par des moyens d'encliquetage, mais cet exemple n'est pas limitatif. Il en va de même pour les moyens complémentaires de maintien de l'élément de blocage en position de blocage ou en position escamotée.

## Revendications

1. Dispositif (10) de solidarisation entre une lame d'essuyage (12) et un support (14) de lame d'essuyage (12) constitutifs d'un balai d'essuie-glace, ledit dispositif (10) comprenant une première partie (20) apte à être fixée sur ledit support (14) et une deuxième partie (22) apte à être fixée sur ladite lame, lesdites première (20) et deuxième (22) parties étant reliées par un moyen de liaison amovible (52, 54, 56), ladite deuxième partie (22) comprenant une gorge d'insertion (26), en translation selon une première direction, d'une partie complémentaire (18) de ladite lame (12), ledit dispositif (10) comprenant un moyen de blocage, en translation selon ladite première direction, de ladite lame dans ladite gorge, **caractérisé en ce que** ledit moyen de blocage comprend au moins un élément de blocage (28) monté coulissant sur ladite deuxième partie (22) entre une position escamotée autorisant le déplacement de ladite partie complémentaire (18) de la lame dans ladite gorge (26) et une position de blocage en translation de ladite partie complémentaire (18) de la lame dans ladite gorge (26).

2. Dispositif (10) selon la revendication 1, dans lequel l'élément de blocage (28) est monté coulissant sur ladite deuxième partie (22) en translation sensiblement perpendiculairement à ladite première direction, entre ladite position escamotée et ladite position de blocage.

3. Dispositif (10) selon l'une quelconque des revendications précédentes, dans lequel au moins l'une desdites première (20) et deuxième (22) parties est en matière plastique.

4. Dispositif (10) selon l'une quelconque des revendications précédentes, dans lequel ladite deuxième partie (22) est surmoulée sur l'élément de blocage (28).

5. Dispositif (10) selon l'une quelconque des revendications précédentes, dans lequel l'élément de blocage (28) est en métal.

6. Dispositif (10) selon l'une quelconque des revendications précédentes, comprenant deux éléments de blocage (28) disposés respectivement de part et d'autre de ladite gorge (26).

7. Dispositif (10) selon l'une quelconque des revendications précédentes, dans lequel l'élément de blocage (28) est de forme sensiblement plane et comprend un bord (30) portant au moins une dent (32) destinée à s'enfoncer dans la lame (12) lorsque l'élément de blocage (28) est en position de blocage.

8. Dispositif (10) selon l'une quelconque des revendications précédentes, dans lequel ladite deuxième partie (22) et l'élément de blocage (28) comprennent des moyens complémentaires (38, 40, 46) de maintien de l'élément de blocage (28) en position de blocage.

9. Dispositif (10) selon la revendication précédente, dans lequel les moyens complémentaires de maintien sont réalisés sous la forme de moyens d'encliquetage (38, 40, 46).

10. Dispositif (10) selon l'une quelconque des revendications précédentes, dans lequel ladite deuxième partie (22) et l'élément de blocage (28) comprennent des moyens complémentaires (42, 48) de maintien de l'élément de blocage (28) en position escamotée.

11. Dispositif (10) selon l'une quelconque des revendications précédentes, dans lequel ledit moyen de liaison amovible reliant lesdites première (20) et deuxième (22) parties est réalisé sous la forme de moyens d'encliquetage (52, 54, 56).

12. Dispositif (10) selon l'une quelconque des revendications précédentes, dans lequel ladite première partie (20) est apte à être fixée sur ledit support (14) par emboîtement.

13. Balai d'essuie-glace comprenant une lame d'essuyage (12) et un support (14) constitutifs d'un balai d'essuie-glace et dans lequel ladite lame (12) est solidarisée sur ledit support (14) par un dispositif selon l'une quelconque des revendications précédentes.

## Patentansprüche

1. Vorrichtung (10) zur festen Verbindung zwischen einem Wischerblatt (12) und einer bestehenden Halterung (14) eines Wischerblattes (12) für ein Scheiben-Wischerblatt, wobei die genannte Vorrichtung (10) einen ersten Teil (20), der geeignet ist, auf der Halterung (14) befestigt zu sein, und einen zweiten Teil (22), der geeignet ist, auf dem Blatt befestigt zu sein, umfasst, wobei der erste (20) und zweite (22) Teil durch ein abnehmbares Verbindungsmittel (52, 54, 56) verbunden sind, wobei der zweite Teil (22) eine Einfüge-Auskehlung (26) in Translation nach einer ersten Richtung eines komplementären Teils (18) des Blattes (12) umfasst, wobei die Vorrichtung (10) ein Feststellmittel in Translation nach der ersten Richtung des Blattes in der Auskehlung umfasst, **dadurch gekennzeichnet, dass** das genannte Feststellmittel wenigstens ein Feststellelement (28) umfasst, das gleitend auf dem zweiten Teil (22) zwischen einer eingefahrenen Position, die das Verschieben des komplementären Teils (18) des Blattes in der Auskehlung (26) erlaubt, und einer Feststellposition in Translation des komplementären Teils (18) des Blattes in der Auskehlung (26) montiert ist.

2. Vorrichtung (10) nach Anspruch 1, bei der das Feststellelement (28) gleitend auf dem genannten zweiten Teil (22) in Translation deutlich lotrecht zur ersten Richtung zwischen der eingefahrenen Position und der Feststellposition montiert ist.

3. Vorrichtung (10) nach irgendeinem der voranstehenden Ansprüche, bei der wenigstens einer des ersten (20) und zweiten (22) Teils aus Plastik ist.

4. Vorrichtung (10) nach irgendeinem der voranstehenden Ansprüche, bei der der zweite Teil (22) auf dem Feststellelement (28) abgeformt ist.

5. Vorrichtung (10) nach irgendeinem der voranstehenden Ansprüche, bei der das Feststellelement (28) aus Metall ist.

6. Vorrichtung (10) nach irgendeinem der voranstehenden Ansprüche, umfassend zwei Feststellelemente (28), die jeweils auf jeder Seite der Auskehlung (26) angeordnet sind.

7. Vorrichtung (10) nach irgendeinem der voranstehenden Ansprüche, bei der das Feststellelement (28) deutlich eben geformt ist und einen Rand (30) umfasst, der wenigstens einen Zahn (32) trägt, der dazu bestimmt ist, in das Blatt (12) einzudringen, wenn das Feststellelement (28) in Feststellposition ist.

8. Vorrichtung (10) nach irgendeinem der voranstehenden Ansprüche, bei der der zweite Teil (22) und das Feststellelement (28) komplementäre Haltemittel (38, 40, 46) des Feststellelements (28) in Feststellposition umfassen.

9. Vorrichtung (10) nach dem voranstehenden Anspruch, bei der die komplementären Haltemittel in Form von Einrastmitteln (38, 40, 46) realisiert sind.

10. Vorrichtung (10) nach irgendeinem der voranstehenden Ansprüche, bei der der zweite Teil (22) und das Feststellmittel (28) komplementäre Haltemittel (42, 48) des Feststellmittels (28) in eingefahrener Position umfassen.

11. Vorrichtung (10) nach irgendeinem der voranstehenden Ansprüche, bei der das abnehmbare Verbindungsmittel, das den ersten (20) und zweiten (22) Teil verbindet, in Form von Einrastmitteln (52, 54, 56) realisiert ist.

12. Vorrichtung (10) nach irgendeinem der voranstehenden Ansprüche, bei der der erste Teil (20) geeignet ist, auf der Halterung (14) durch Eingreifen befestigt zu sein.

13. Scheibenwischerblatt, umfassend ein Wischerblatt (12) und eine bestehende Halterung (14) eines Schweibenwischerblattes und bei dem das Blatt (12) auf der Halterung (14) durch eine Vorrichtung nach irgendeinem der voranstehenden Ansprüche fest verbunden ist.

## Claims

1. Securing device (10) between a wiper blade (12) and a wiper blade support (14) constituting a windscreen wiper, said device (10) comprising a first part (20) suitable for being fixed onto said support (14) and a second part (22) suitable for being fixed onto said blade, said first (20) and second (22) parts being linked by a removable link means (52, 54, 56), said second part (22) comprising a groove (26) for insertion, by translation in a first direction, of a complementary part (18) of said blade (12), said device (10) comprising a means for immobilizing, in translation in said first direction, said blade in said groove, **characterized in that** said immobilizing means comprises at least one immobilizing element (28) mounted to slide on said second part (22) between a retracted position allowing the displacement of said complementary part (18) of the blade in said groove (26) and a position of translationally immobilizing said complementary part (18) of the blade in said groove (26).

2. Device (10) according to Claim 1, in which the immobilizing element (28) is mounted to slide on said second part (22) in translation substantially at right angles to said first direction, between said retracted position and said immobilizing position.

3. Device (10) according to either one of the preceding claims, in which at least one of said first (20) and second (22) parts is made of plastic material.

4. Device (10) according to any one of the preceding claims, in which said second part (22) is overmoulded on the immobilizing element (28).

5. Device (10) according to any one of the preceding claims, in which the immobilizing element (28) is made of metal.

6. Device (10) according to any one of the preceding claims, comprising two immobilizing elements (28) arranged respectively on either side of said groove (26) .

7. Device (10) according to any one of the preceding claims, in which the immobilizing element (28) is of substantially planar form and comprises an edge (30) bearing at least one tooth (32) intended to be sunk into the blade (12) when the immobilizing element (28) is in the immobilizing position.

8. Device (10) according to any one of the preceding claims, in which said second part (22) and the immobilizing element (28) comprise complementary means (38, 40, 46) for holding the immobilizing element (28) in the immobilizing position.

9. Device (10) according to the preceding claim, in which the complementary holding means are produced in the form of snap-fitting means (38, 40, 46).

10. Device (10) according to any one of the preceding claims, in which said second part (22) and the immobilizing element (28) comprise complementary means (42, 48) for holding the immobilizing element (28) in the retracted position.

11. Device (10) according to any one of the preceding claims, in which said removable means for linking said first (20) and second (22) parts is produced in the form of snap-fitting means (52, 54, 56).

12. Device (10) according to any one of the preceding claims, in which said first part (20) is suitable for being fixed onto said support (14) by insertion.

13. Windscreen wiper comprising a wiper blade (12) and a support (14) constituting a windscreen wiper and in which said blade (12) is secured onto said support (14) by a device according to any one of the preceding claims.
